# DEMANDE DE BREVET EUROPEEN

(11) **EP 1 939 760 A1**
(43) Date de publication de la demande: **02.07.2008**
(21) Numéro de dépôt: 06301276.9
(22) Date de dépôt: 20.12.2006
(51) Int. Cl.: G06F 17/30

(54) **Procédé et dispositif de gestion de données dans un environnement distribué**

(71) Demandeur: GEMPLUS, 13420 Gémenos (FR)
(72) Inventeur: Charbonnier, Emilien GEMPLUS, LA CADIERE D'AZUR 83740 (FR)

(57) **Abrégé**

L'invention concerne un procédé de gestion de données d'un dispositif électronique portable connecté à une machine hôte, ledit dispositif contenant des premières données, la machine hôte étant connecté à un serveur de données distant contenant des deuxièmes données. Ledit procédé comporte les étapes de :
- constituer, dans le dispositif, une liste unique énumérant les premières et deuxièmes données,
- transmettre la liste unique depuis le dispositif vers la machine hôte.

## Description

### (Domaine technique)

La présente invention se rapporte aux procédés et dispositifs de gestion de données dans un environnement distribué. Plus précisément, l'invention concerne les procédés de gestion de données destinés à fournir une vue unifiée de plusieurs données stockées dans une pluralité de dispositifs.

### (Art antérieur)

Un dispositif électronique portable tel qu'une clef mémoire USB offre un espace de stockage amovible dont la taille est limitée par la taille de la mémoire physique du dispositif. Un tel dispositif se connecte sur une machine hôte qui peut accéder aux données stockées sur le dispositif. Les données stockées dans le dispositif sont des données enregistrées dans la mémoire locale du dispositif.
On connaît également des solutions de stockage en ligne qui offrent à l'utilisateur des espaces de stockage bien plus grands pour un coût moindre. Mais dans le cas de mémoire distante stockée dans des serveurs distants, l'utilisateur ne peut être certain que ses données puissent être accédées comme cela peut être le cas avec un dispositif de type clef USB.

D'autre part l'utilisateur qui souhaite accéder à la fois à des données placées dans une mémoire locale et dans une mémoire distante doit utiliser différentes vues. Ces vues lui permettant d'accéder à la liste des données selon chaque localisation. Une vue des données stockées dans un espace local ne contient pas les données présentes sur l'espace de stockage distant et réciproquement.

Il est connu de la demande de brevet WO02/01891, de gérer, dans un téléphone mobile, des données provenant de plusieurs sources. Ce document propose d'automatiser le choix de la localisation des données, à travers plusieurs supports, lors des phases de lecture et d'écriture de données. Cette automatisation est réalisée dans le téléphone mobile qui utilise un logiciel spécifique pour accéder aux données réparties et constituer une vue unifiée. Cette solution n'est pas portable, mais reste limitée aux téléphones équipés d'un logiciel spécifique.

Habituellement, les clefs USB stockent les données sous la forme de fichiers. De façon classique, les clefs USB sont vues comme des disques amovibles par l'explorateur de fichiers situé sur la machine hôte. De telles clés ne produisent pas elles-mêmes la vue représentée mais ce sont des logiciels de la machine hôte qui génère la vue. Généralement, c'est le système d'exploitation de la machine hôte qui gère la table d'allocation des fichiers et c'est un explorateur de fichier qui fournit une vue de cette table. Ces clefs sont donc passives et ne peuvent offrir une vue particulière de chacun des fichiers qu'elles contiennent, encore moins des fichiers qui se trouvent dans un autre espace.

Les serveurs en ligne génèrent eux-mêmes la liste des fichiers qu'ils hébergent et rendent cette liste accessible à un explorateur situé sur une machine connecté après une authentification au travers de protocoles comme WEBDAV (acronyme anglais pour Web-based Distributed Authoring and Versioning) ou FTP (acronyme anglais pour File Transfer Protocol) par exemple.
Les solutions logicielles existantes ne présentent pas une vue unifiée mais une vue simple des fichiers présents à l'endroit choisi par l'utilisateur. Ainsi si l'utilisateur possède un fichier présent à la racine de son espace de stockage local, il ne peut voir dans la même vue les fichiers présents à la racine de son espace de stockage distant. Il doit en fait ouvrir une deuxième fenêtre ou utiliser une vue à base de système arborescent classique de gestion de données.
Un problème est que dans l'art antérieur les moyens de gestion des données provenant de différents supports sont implémentés dans la machine hôte, notamment dans le téléphone mobile qui fait office de machine hôte pour les dispositifs portables de mémoire. En outre, un problème est que l'utilisateur ne peut pas bénéficier d'une vue unique de l'ensemble des données provenant de différents supports sans installer un programme dédié dans la machine hôte.

### (Résumé de l'invention)

L'invention vise à faire bénéficier l'utilisateur du dispositif portable d'une vue unifiée lui permettant d'accéder via une liste unique à ses données qui sont présentes sur le dispositif portable et qui sont stockées sur son serveur distant. L'invention vise à faire en sorte que cette vue soit portable et ne nécessite pas d'installer un nouveau logiciel spécifique sur la machine hôte à laquelle est connectée le dispositif portable.

L'invention est un procédé de gestion de données d'un dispositif électronique portable connecté à une machine hôte. Ledit dispositif contient des premières données, la machine hôte est connectée à un serveur de données distant qui contient des deuxièmes données. Le procédé comporte les étapes de :
- constituer, dans le dispositif, une liste unique énumérant les premières et deuxièmes données,
- transmettre la liste unique depuis le dispositif vers la machine hôte.
Préférentiellement, des troisièmes données peuvent être stockées de façon persistante sur le dispositif. Ces troisièmes données énumèrent les deuxièmes données distantes. La liste unique (LU) peut être constituée à partir des premières et troisièmes données.

En variante, le serveur distant peut contenir des quatrièmes données qui énumèrent les deuxièmes données stockées sur le serveur distant. La constitution de liste unique peut comprendre les étapes de:
- établir une session d'échange de données entre le dispositif et le serveur distant via la machine hôte,
- transmettre lesdites quatrièmes données depuis le serveur distant vers le dispositif,
- constituer la liste unique à partir des premières et quatrièmes données dans le dispositif.
Préférentiellement, après l'établissement d'une session d'échange de données entre le dispositif et le serveur distant, des quatrièmes données, énumérant les deuxièmes données stockées sur le serveur distant, peuvent être transmises au dispositif. Puis des troisièmes données énumérant les deuxièmes données distantes stockées sur le serveur distant peuvent être mises à jour dans le dispositif en fonction des quatrièmes données reçues.
Avantageusement, après une requête de lecture d'une donnée distante émise par la machine hôte, une donnée stockée sur le serveur distant peut être d'abord transmise au dispositif par le serveur, puis être transmise par ledit dispositif à la machine hôte.
En variante, la liste unique des données transmise à la machine hôte peut contenir des informations indiquant la localisation de chaque donnée de la liste.
De préférence, l'accès aux premières données stockées dans le dispositif peut être soumis à la vérification de conditions d'accès. Dans ce cas, l'établissement d'une session d'échange de données entre le dispositif et le serveur distant peut être soumis à la réussite de la vérification desdites conditions d'accès.
Avantageusement, le serveur distant peut contenir des données relatives à des conditions d'accès liées à des troisièmes données stockées sur le serveur distant. Dans ce cas, la vérification desdites conditions d'accès peut être automatiquement activée par le dispositif.
En variante, le dispositif peut contient des informations d'accès aux données du serveur distant. Dans ce cas, après l'établissement d'une session d'échange de données entre ledit dispositif et le serveur distant, les données relatives aux conditions d'accès peuvent être transmises au dispositif, puis lesdites informations d'accès aux données du serveur distant peuvent être mises à jour dans le dispositif en fonction des données reçues.
De façon avantageuse, les données relatives aux conditions d'accès peuvent être modifiées par un premier dispositif pour autoriser l'accès auxdites deuxièmes données par un second dispositif électronique portable du même type que le premier dispositif.

En variante, le serveur distant peut contenir des cinquièmes données qui énumèrent des données stockées sur un second dispositif portable. Après l'établissement d'une session d'échange de données entre le premier dispositif et le serveur distant, les cinquièmes données peuvent être transmises au premier dispositif, puis des troisièmes données énumérant les données distantes peuvent être mises à jour dans le premier dispositif en fonction des cinquièmes données reçues.

En variante, le serveur distant peut contenir des informations d'accès à des données stockées sur le second dispositif. Après l'établissement d'une session d'échange de données entre le premier dispositif et le serveur distant, les informations d'accès à des données stockées sur le second dispositif peuvent être transmises au premier dispositif. Puis des données contenant des informations d'accès à des données distantes peuvent être mises à jour dans le premier dispositif en fonction des informations d'accès reçues.

L'invention est aussi un dispositif portable destiné à être connecté à une machine hôte et comprenant un microprocesseur et une mémoire de données qui contient des premières données. La machine hôte est destinée à être connectée à un serveur distant contenant des deuxièmes données. Le dispositif contient des moyens pour constituer une liste unique énumérant les premières et deuxièmes données et des moyens pour transmettre la liste unique vers la machine hôte.
Préférentiellement, le dispositif portable peut contenir des troisièmes données énumérant les deuxièmes données situées sur le serveur distant.
Avantageusement, le dispositif portable peut contenir des informations d'accès aux données du serveur distant.

De préférence, le dispositif portable est une carte à puce ou une clé USB de stockage de données.

L'invention est aussi un serveur destiné à être connecté à une machine hôte, comprenant un microprocesseur et une mémoire de données qui contient des données distantes. La machine hôte est destinée à être connectée à un dispositif portable mentionné précédemment. Le dispositif contient des données locales et le serveur contient des moyens pour transmettre une réponse à une requête du dispositif, après l'établissement d'une session d'échange de données entre le dispositif et le serveur. La réponse contient les données énumérant les données distantes.

D'autres particularités et avantages de l'invention apparaîtront clairement à la lecture de la description faite à titre d'exemple non limitatif et en regard des figures suivantes dans lesquelles:
- la figure 1 illustre un système comprenant un serveur, deux machines hôtes, une carte à puce et une clé USB comportant des moyens de gestion de données réparties;
- la figure 2 illustre un exemple de liste unique telle que produite dans le cadre de l'invention.

### (Description d'un exemple détaillé de l'invention)

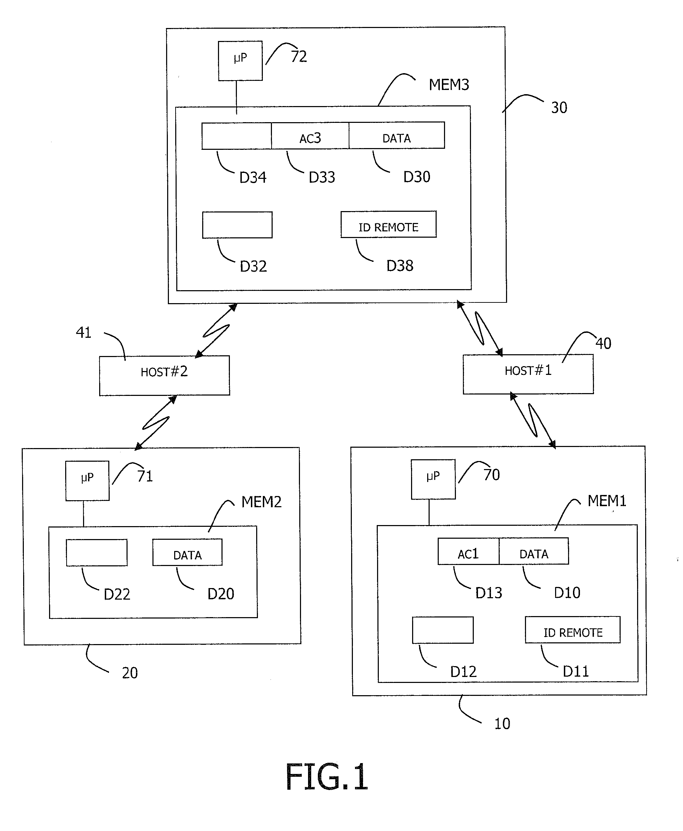

L'invention peut s'appliquer à tout type de dispositifs portables électroniques qui se connecte à une machine hôte. Notamment elle peut s'appliquer pour des appareils numériques sécurisés portatifs réunissant un processeur et une ou plusieurs mémoires, tel qu'une clé USB, mais aussi une carte à puce.
Un avantage de l'invention est de permettre à l'utilisateur d'un dispositif électronique portable de pouvoir accéder à des données dont le volume dépasse la taille des données physiquement stockées dans la mémoire du dispositif portable. Une partie des données peut être stockée sur un serveur distant. Selon l'invention, cet accès aux données peut être réalisé depuis n'importe quelle machine hôte connecté à un réseau permettant d'accéder au serveur de données distant sur lequel sont stockées les données de l'utilisateur.
Selon un mode de réalisation préféré, le procédé de gestion de données est mis en oeuvre par une carte à puce 10 et par un serveur distant 30 tels que représentés à la figure 1. La carte à puce contient un microprocesseur 70, une mémoire MEM1 qui contient des données applicatives D10, des données D11 énumérant des données distantes et des données D12 contenant des informations d'accès à des données distantes. Le serveur distant 30 contient un microprocesseur 72, une mémoire MEM3 qui contient des données applicatives D30, des données D34 énumérant les données stockées sur le serveur 30 et des données D33 contenant des informations d'accès AC3 aux données stockées sur le serveur 30.
Une machine hôte 40 est connectée d'une part à la carte à puce 10 et d'autre part au serveur distant 30. La machine hôte 40 peut être par exemple un ordinateur équipé des logiciels habituellement installés sur ce type de machine tel qu'un système d'exploitation, un explorateur de fichier et un navigateur WEB.
Dans les mémoires MEM1 et MEM3 respectivement de la carte 10 et du serveur 30, les données peuvent être structurées sous la forme de fichiers stockés dans une arborescence de répertoires.
Lorsque la machine hôte 40 doit visualiser la liste des données de la carte à puce 10, une demande de vue sur les fichiers est transmise par la machine hôte 40 vers la carte à puce 10. La carte à puce 10 établit alors une session d'échange de données avec le serveur distant 30 en utilisant le pont d'accès formé par la machine hôte 40. La carte à puce 10 demande ensuite la liste des fichiers auxquels elle peut accéder sur le serveur distant 30. Puis le serveur renvoie la liste des fichiers correspondants à la carte à puce 10 en transitant via la machine hôte 40. La carte à puce 10 constitue alors une liste unique LU des fichiers présents sur la carte elle-même et sur le serveur. Cette liste LU peut être réalisée sous la forme d'une vue HTML unifiée des fichiers. Cette vue HTML est ensuite envoyée à la machine hôte 40. Enfin le navigateur WEB de la machine hôte affiche la liste unique LU des fichiers sous la forme d'une vue HTML unifiée des fichiers localisés sur des supports différents. Le navigateur WEB peut être Internet Explorer ou Mozilla Firefox par exemple. Si la machine hôte 40 demande à lire une donnée D30 stockée sur le serveur 30, la donnée D30 est d'abord transmise à la carte 10, puis la carte 10 transmet la donnée D30 à la machine hôte 40, comme si cette donnée provenait exclusivement de la carte 10. Si deux répertoires sur la carte et sur le serveur distant portent le même nom, alors les fichiers locaux et distants seront présentés sous un unique répertoire.

Selon une première alternative, la liste unique LU des données peut être réalisée sous la forme d'une vue unifiée des données au format FTP ou WEBDAV. La liste unique LU est alors affichée sur la machine hôte par un explorateur de fichier traditionnel tel que l'Explorateur Windows par exemple.
Selon une deuxième alternative, un logiciel spécifique peut être préalablement installé sur la machine hôte. La liste unique LU des données peut être réalisée sous la forme d'une vue unifiée des données dans un format normalisé tel que FTP ou WEBDAV ou bien dans un format particulier. Après transmission, la liste unique LU est alors affichée sur la machine hôte par le logiciel spécifique.

Selon une variante, la constitution de la liste unique LU des données est faite par la carte à puce 10 sans établissement de session d'échange de données avec le serveur distant 30. La carte 10 utilise alors les données D11 qui énumèrent les données distantes pour constituer la liste unique LU des données présentes sur la carte elle-même et sur le serveur. Cette solution permet à la carte d'améliorer le temps de réponse à la requête initiale de la machine hôte.

Selon une alternative, la carte 10 essaye d'établir une session d'échange de données avec le serveur distant 30 mais utilise uniquement les données D11 qui énumèrent les données distantes pour constituer la liste unique LU des données présentes sur la carte elle-même et sur le serveur. Avec la liste unique LU, la carte peut transmettre des informations supplémentaires relatives à l'état de la liaison entre la carte 10 et le serveur distant 30. Ces informations supplémentaires peuvent être exploitées par la machine hôte pour indiquer à l'utilisateur si les données de la liste unique LU sont accessibles immédiatement ou non.

Selon une autre variante, après l'établissement d'une session d'échange de données entre la carte à puce 10 et le serveur distant 30, les données D34 énumérant les données D30 stockées sur le serveur 30 sont transmises à la carte 10. La carte peut alors mettre à jour les données D11 qui énumèrent les données distantes D30 en fonction des données D34 reçues. Cette opération permet d'assurer une synchronisation entre les données du serveur 30 et la liste correspondante stockée dans la carte. De la même façon, la carte 10 peut stocker une copie d'une partie des fichiers distants qui ont été accédés en dernier ou qui sont le plus fréquemment accédés.

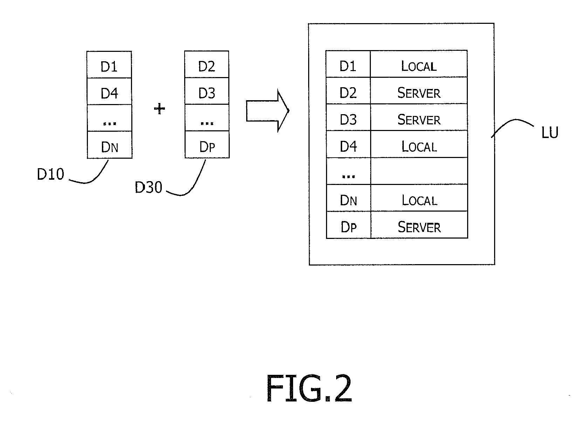

La figure 2 représente un exemple de constitution de la liste unique LU par la carte. Dans ce cas, la carte 10 constitue une liste unique LU qui contient des informations indiquant la localisation de chaque donnée de la liste. Cela permet à la machine hôte de présenter à l'utilisateur une indication qui précise le support sur lequel se situe chaque donnée. A travers une vue unifiée sur la machine hôte 40, l'utilisateur pourra dans ce cas savoir si une donnée est placée sur la carte 10 ou sur le serveur distant 30. L'indication peut notamment être réalisée sous la forme d'une icône spéciale ou d'un code couleur particulier.

Afin d'assurer la confidentialité, l'accès aux données de la carte 10 peut être soumis à la vérification de conditions d'accès AC1. Dans ce cas, le paramétrage de la carte peut prévoir que l'établissement de la session d'échange de données entre la carte 10 et le serveur distant 30 est soumis au succès de la vérification des conditions d'accès AC1. Ainsi la carte 10 ne pourra accéder aux données du serveur 30 que si l'utilisateur a entré les conditions d'accès correctes. Les conditions d'accès AC1 peuvent être stockées dans des données D13 au sein de la mémoire MEM1 de la carte 10.
En outre, les données D30 stockées sur le serveur 30 peuvent être elles-mêmes protégées par des conditions d'accès particulières AC3. Dans ce cas, une fois la session d'échange de données établie entre la carte 10 et le serveur distant 30, la carte 10 transmet une requête d'activation des conditions d'accès AC3 au serveur 30. Pour le paramétrage de cette requête, la carte 10 utilise les données D12 contenant les informations d'accès aux données distantes. Cette activation des conditions d'accès aux données du serveur est déclenchée automatiquement par la carte. Cette automatisation est avantageuse, notamment lorsque les conditions d'accès AC1 aux données de la carte sont différentes des conditions d'accès AC3 aux données du serveur 30. Ce mécanisme permet de masquer les particularités nécessaires pour accéder aux données distantes en affranchissant l'utilisateur d'une gestion des conditions d'accès aux données distantes. Les conditions d'accès peuvent notamment être la présentation d'un code secret ou l'établissement d'une authentification avec une clé. Un avantage complémentaire de l'invention est de garantir à l'utilisateur que ses données ne sont pas accessibles tant que sa carte n'est pas insérée dans la machine hôte.

De façon optionnelle, le serveur 30 peut contenir des données D33 relatives aux conditions d'accès AC3 aux données D30 du serveur 30. La carte 10 peut transmettre une requête au serveur 30 afin de modifier les données D33 pour autoriser l'accès aux données D30 par un second dispositif portable 20. Le second dispositif portable est du même type que la carte 10, c'est-à-dire que le second dispositif 20 intègre aussi l'invention. Le second dispositif 20 peut avoir un facteur de forme différent de celui de la carte 10. Par exemple, le second dispositif 20 peut être une clé USB. La clé USB 20 contient un microprocesseur 71, une mémoire MEM2 qui contient des données applicatives D20 et des données D22 contenant des informations d'accès à des données distantes. La délégation d'accès à la clé USE 20 permet à l'utilisateur de la carte 10 de partager, avec l'utilisateur d'un autre dispositif portable, tout ou partie des données D30 qui sont stockées sur le serveur distant 30. La clé USE 20 pourra accéder aux données D30 du serveur distant 30 à travers une seconde machine hôte 41 connectée au serveur 30. Le partage d'accès peut se décliner sous la forme d'une autorisation en lecture uniquement ou en lecture/écriture pour un ou plusieurs utilisateurs.
De façon optionnelle, le serveur 30 peut contenir des données D38 énumérant les données D20 stockées sur la clé USE 20. Le serveur 30 peut transmettre les données D38 à la carte 10. La carte peut alors mettre à jour les données D11 qui énumèrent les données distantes en fonction des données D38 reçues. Cette opération permet d'assurer une synchronisation entre la liste des données accessibles à distance et les données D11 correspondantes stockée dans la carte.

En complément, le serveur distant 30 peut contenir des données D32 relatives aux informations d'accès à des données D10 stockées sur la carte 10. Le serveur 30 peut transmettre les données D32 à la clé USE 20. Dans ce cas des données D22 contenant des informations d'accès aux données distantes sont mises à jour dans la clé USE 20 en fonction des données reçues D32. Cette opération permet d'assurer une synchronisation entre les informations d'accès des données situées sur une autre carte et les données D22 correspondantes stockées dans la clé USB 20. Ce mécanisme permet à un utilisateur de partager des données de manière sécurisée avec d'autres utilisateurs.
Un autre avantage de l'invention est de permettre un accès via un dispositif portable 10 à des données qui ont été directement écrites sur un autre dispositif portable 20 ou sur un serveur distant 30.

De façon alternative, la carte 10 peut déléguer à la machine hôte 40 une partie des traitements qu'elle réalise ordinairement. Par exemple, la carte 10 peut générer un script qu'elle transmet à la machine hôte 40. Ce script peut être ensuite interprété et exécuté par la machine hôte 40 pour réaliser une authentification avec le serveur distant 30.
La taille de la mémoire MEM3 située dans le serveur distant 30 peut être dynamiquement modifiée par un administrateur du serveur. Par exemple, la taille allouée à la mémoire MEM3 peut être augmentée pour permettre à l'utilisateur de la carte 10 de disposer d'un supplément d'espace mémoire pour stocker une plus grande quantité de données.
Un autre avantage de l'invention est de fournir une vue unifiée de fichiers qui sont stockés dans des systèmes de fichiers différents d'un support à l'autre. Par exemple, le système de fichier peut être NTFS sur le serveur distant 30 et FAT16 sur la carte 10.
Le dispositif électronique portable 10 peut être connecté à la machine hôte 40 par une liaison à contact ou sans contact.
De façon optionnelle, sur requête de l'utilisateur ou de façon automatique, la clé USB 20 peut envoyer au serveur distant 30 des données qu'elle contient afin que le serveur effectue une copie de sauvegarde des données ainsi transmises. Le serveur 30 peut faire la sauvegarde des données dans un espace mémoire dédié et/ou sécurisé. Ultérieurement, l'utilisateur pourra, après s'être correctement authentifié, recréer un contenu de clé USB à l'identique en accédant aux données sauvegardées sur le serveur.
Enfin, un avantage de l'invention est de permettre à l'utilisateur de rechercher un fichier donné sans se soucier de savoir si ce fichier est stocké sur la carte 10 ou sur le serveur distant 30.

## Revendications

1. Procédé de gestion de données d'un dispositif électronique portable (10) connecté à une machine hôte (40), ledit dispositif (10) contenant des premières données (D10), la machine hôte (40) étant connectée à un serveur de données distant (30) contenant des deuxièmes données (D30), ledit procédé étant **caractérisé en ce qu'**il comporte les étapes de:
- constituer, dans le dispositif (10), une liste unique (LU) énumérant les premières et deuxièmes données (D10, D30),
- transmettre la liste unique (LU) depuis le dispositif (10) vers la machine hôte (20).

2. Procédé selon la revendication 1, dans lequel des troisièmes données (D11) sont stockées de façon persistante sur le dispositif (10), lesdites troisièmes données (D11) énumérant les deuxièmes données distantes (D30), et dans lequel la liste unique (LU) est constituée à partir des premières et troisièmes données (D10, D11).

3. Procédé selon la revendication 1, dans lequel ledit serveur distant (30) contient des quatrièmes données (D34) énumérant les deuxièmes données (D30) stockées sur le serveur distant (30), et dans lequel la constitution de liste unique (LU) comprend les étapes de :
- établir une session d'échange de données entre le dispositif (10) et le serveur distant (30) via la machine hôte (40),
- transmettre lesdites quatrièmes données (D34) depuis le serveur distant (30) vers le dispositif (10),
- constituer la liste unique (LU) à partir des premières et quatrièmes données (D10, D34) dans le dispositif (10).

4. Procédé selon la revendication 1, dans lequel, après l'établissement d'une session d'échange de données entre le dispositif (10) et le serveur distant (30), des quatrièmes données (D34) énumérant les deuxièmes données (D30) stockées sur le serveur distant (30) sont transmises au dispositif (10), puis des troisièmes données (D11) énumérant les deuxièmes données distantes (D30) stockées sur le serveur distant (30) sont mises à jour dans le dispositif (10) en fonction des quatrièmes données reçues (D34).

5. Procédé selon l'une des revendications 1 à 4, dans lequel, après une requête de lecture d'une donnée distante (D30) émise par la machine hôte (40), une donnée (D30) stockée sur le serveur distant (30) est d'abord transmise au dispositif (10) par le serveur (30), puis est transmise par ledit dispositif (10) à la machine hôte (40).

6. Procédé selon l'une des revendications 1 à 5, dans lequel la liste unique (LU) des données transmise à la machine hôte (40) contient des informations indiquant la localisation de chaque donnée de la liste (LU).

7. Procédé selon l'une des revendications 3 ou 4, dans lequel l'accès aux premières données (D10) stockées dans le dispositif (10) est soumis à la vérification de conditions d'accès (AC1), et dans lequel l'établissement d'une session d'échange de données entre le dispositif (10) et le serveur distant (30) est soumis à la réussite de la vérification desdites conditions d'accès (AC1).

8. Procédé selon l'une des revendications 3 à 4, dans lequel le serveur distant (30) contient des données (D33) relatives à des conditions d'accès (AC3) liées à des troisièmes données (D30) stockées sur le serveur distant (30), et dans lequel la vérification desdites conditions d'accès (AC3) est automatiquement activée par le dispositif (10).

9. Procédé selon la revendication 8, dans lequel le dispositif (10) contient des informations d'accès (D12) aux données du serveur distant (30), et dans lequel, après l'établissement d'une session d'échange de données entre ledit dispositif (10) et le serveur distant (30), les données (D33) relatives aux conditions d'accès (AC3) sont transmises au dispositif (10), puis lesdites informations d'accès (D12) aux données du serveur distant (30) sont mises à jour dans le dispositif (10) en fonction des données reçues (D33).

10. Procédé selon l'une des revendications 8 à 9, dans lequel les données (D33) relatives aux conditions d'accès (AC3) sont modifiées par un premier dispositif (10) pour autoriser l'accès auxdites deuxièmes données (D30) par un second dispositif électronique portable (20) du même type que le premier dispositif (10).

11. Procédé selon la revendication 10, dans lequel le serveur distant (30) contient des cinquièmes données (D38) énumérant des données (D20) stockées sur un second dispositif portable (20), et dans lequel après l'établissement d'une session d'échange de données entre le premier dispositif (10) et le serveur distant (30), lesdites cinquièmes données (D38) sont transmises au premier dispositif (10), puis des troisièmes données (D11) énumérant les données distantes sont mises à jour dans le premier dispositif (10) en fonction des cinquièmes données reçues (D38).

12. Procédé selon la revendication 10, dans lequel le serveur distant (30) contient des informations d'accès (D32) à des données (D20) stockées sur le second dispositif (20), et dans lequel, après l'établissement d'une session d'échange de données entre le premier dispositif (10) et le serveur distant (30), lesdites informations d'accès (D32) à des données (D20) stockées sur le second dispositif (20) sont transmises au premier dispositif (10), puis des données (D12) contenant des informations d'accès à des données distantes sont mises à jour dans le premier dispositif (10) en fonction des informations d'accès reçues (D32).

13. Dispositif portable destiné à être connecté à une machine hôte (40), comprenant un microprocesseur (70) et une mémoire (MEM1) de données contenant des premières données (D10), ladite machine hôte (40) étant destinée à être connectée à un serveur distant (30) contenant des deuxièmes données (D30), **caractérisé en ce que** ledit dispositif (10) contient des moyens pour constituer une liste unique (LU) énumérant les premières et deuxièmes données (D10, D30) et des moyens pour transmettre la liste unique (LU) vers la machine hôte (40).

14. Dispositif portable selon la revendication 13 **caractérisé en ce que** ledit dispositif (10) contient des troisièmes données (D11) énumérant les deuxièmes données (D30) situées sur le serveur distant (30).

15. Dispositif portable selon l'une des revendications 13 ou 14, **caractérisé en ce que** ledit dispositif (10) contient des informations d'accès (D12) aux données (D30) du serveur distant (30).

16. Dispositif portable selon l'une des revendications 13 à 15, **caractérisé en ce que** ledit dispositif (10) est une carte à puce ou une clé USB de stockage de données.

17. Serveur destiné à être connecté à une machine hôte (40), comprenant un microprocesseur (72) et une mémoire (MEM3) de données contenant des données distantes (D30), ladite machine hôte (40) étant destinée à être connectée à un dispositif portable (10) selon l'une des revendications 13 à 16, ledit dispositif (10) contenant des données locales (D10), **caractérisé en ce que** le serveur (30) contient des moyens pour transmettre une réponse à une requête du dispositif (10), après l'établissement d'une session d'échange de données entre le dispositif (10) et le serveur (30), ladite réponse contenant des données énumérant les données distantes (D30).
